# EUROPEAN PATENT SPECIFICATION

(11) **EP 4 461 179 B1**
(45) Date of publication and mention of the grant of the patent: **08.10.2025**
(21) Application number: 24174686.6
(22) Date of filing: 08.05.2024
(51) Int. Cl.: A01M 1/22, A47L 7/00, A47L 9/24, A01M 3/00

(54) **VACUUM SUCTION ADAPTER DEVICE WITH ELECTRIC SHOCK MODULE**
VAKUUMSAUGADAPTERVORRICHTUNG MIT ELEKTROSCHOCKMODUL
DISPOSITIF ADAPTATEUR D'ASPIRATION À VIDE AVEC MODULE DE CHOC ÉLECTRIQUE

(30) Priority: 08.05.2023 CN 202310510866
(43) Date of publication of application: 13.11.2024
(73) Proprietor: Ho, Yi Chang, Zhubei City, Hsinchu County (TW)
(72) Inventor: Ho, Yi Chang, Zhubei City, Hsinchu County (TW)
(74) Representative: Sun, Yiming

(56) References cited:
- KR-A- 20120 055 853
- KR-B1- 101 019 040

## Description

### BACKGROUND OF THE INVENTION

### Field of the Invention

The present invention relates to a vacuum suction adapter device, particularly relates to a vacuum suction adapter device equipped with an electric shock module at the same time.

### Description of Related Art

Vacuum cleaners have become one of standard cleaning equipment in people's modern home lives because they are very convenient to use and operate, and can be used to quickly suck out dust or foreign matters to clean rooms. However, such conventional cleaners cannot be used to deal with moving active insects (such as cockroaches, ants, etc.) that can be seen everywhere in people's lives. Since the insects are mobile, they will stay in a dust collective box of such cleaners and be in a stampede therein even for being sucked in by the vacuum cleaners. Therefore, generally speaking, such vacuum cleaners are not used to suck out moving active insects, and such vacuum cleaners are also not considered to be used to eliminate insects. Most people generally have psychological fears when they face cockroaches and ants wondering around, and they are under a great mental pressure caused by their encountering of the insects.

There are various ways to eliminate cockroaches on the market. The ways can be roughly divided into methods of using drugs, physically capturing methods, or mixed methods of using drugs and physically capturing. For example, there are various types of cockroach traps, and the various types include a bait type, an adhesive type, and a capture type, etc. A method of using the bait-typed cockroach trap is to place the cockroach trap randomly with baits disposed inside the cockroach trap. The baits are usually added with insecticide ingredients. The ingredients have a delayed effect. When the baits added with the insecticide ingredients are brought back to cockroach's nest colony, the baits will be spread to other insects in order to therefore eliminate a large number of pest menaces. The cockroach trap, with the baits without insecticide ingredients placed inside, can be combined with use of a strong adhesive or a capture box only allowing entry of cockroaches and preventing their exit so that cockroaches cannot escape.

Further considering the above various ways to eliminate cockroaches, in addition to problems of drug residues and accidental ingestion by children or pets, the method of using drugs has disadvantages that long-term and large-scale use of drugs will not only cause insects to become drug-resistant, but also will cause a negative contamination on people's environment. The physical capturing method can be designated to be combined with use of a strong adhesive so that cockroaches cannot escape. However, a surface containing the strong adhesive may cause not only problems if the surface is accessible to children and pets, but also issues in dealing with the cockroaches stuck in the capture box. The physical capturing method can be also designated to be combined with use of a capture box that only allows entry of cockroaches and rejects their exit so that the cockroaches are unable to escape. However, how to deal with captured active cockroaches can also be a problem. The above-mentioned cockroach traps typically are placed randomly and need to be recycled and discarded after a certain period of time. However, users are prone to forget their placement locations. KR 101 019 040 B1 and KR 2012 0055853 A disclose vacuum suction adapters with electric shock modules.

In view of the above various ways to eliminate cockroaches, there are problems and deficiencies that need to be overcome and solved for the current cockroach elimination methods.

Therefore, enhancing the capability of existing vacuum cleaners in modern household life to eliminate pests is a primary issue to be solved by the present invention.

### BRIEF SUMMARY OF THE INVENTION

The invention is as defined in claims 1-14

### BRIEF DESCRIPTION OF THE DRAWINGS

FIG. 1 shows a schematic cross-sectional view of a vacuum suction adapter device equipped with an electric shock module in accordance with a preferred embodiment of the present invention.
FIG. 2 shows a schematic perspective view of the electric shock module being metal meshes in accordance with a preferred embodiment of the present invention.
FIG. 3 shows a schematic cross-sectional view of a vacuum suction adapter device equipped with an electric shock module in accordance with another preferred embodiment of the present invention.
FIG. 4 shows a schematic perspective view of the electric shock module being metal pieces in accordance with a preferred embodiment of the present invention.
FIG. 5 shows a schematic cross-sectional view of an electric shock module being metal pieces in accordance with another preferred embodiment of the present invention.
FIG. 6 shows a schematic cross-sectional view of the adapter main body having a suction head thereof with a smaller area in accordance with a preferred embodiment of the present invention.
FIG. 7 shows a schematic cross-sectional view of an electric shock module having an electrode position adjusting control unit in accordance with a preferred embodiment of the present invention.
FIG. 8 shows a schematic cross-sectional view of an electrode of an electric shock module being a flexible metal piece in accordance with a preferred embodiment of the present invention.
FIG. 9 shows a schematic cross-sectional view of an electrode of an electric shock module being a flexible metal piece in accordance with another preferred embodiment of the present invention.
FIG. 10 shows a schematic cross-sectional view of a vacuum suction adapter device including a control switch and a battery module in accordance with another preferred embodiment of the present invention.

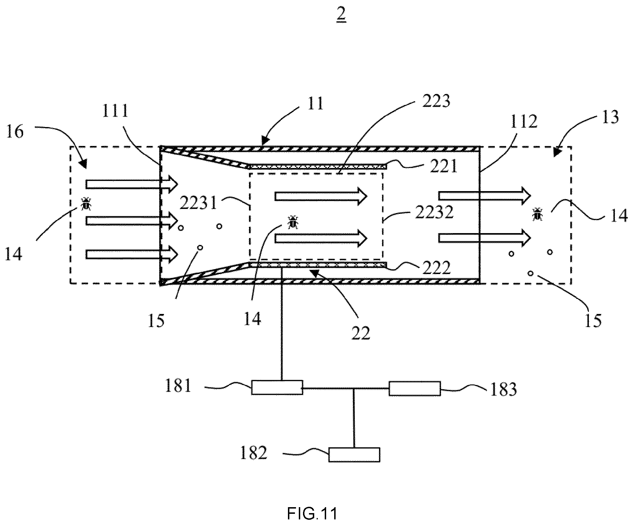

FIG. 11 shows a schematic cross-sectional view of a vacuum suction adapter device including a control switch and a battery module in accordance with further another preferred embodiment of the present invention.

### DETAILED DESCRIPTION OF THE INVENTION

Regrading technical solutions of the present invention, several preferred embodiments are exemplified and illustrated in detail below in accompany with drawings so as to provide the public with an in-depth understanding and recognition of the present invention.

The present invention is further described in detail below in conjunction with the accompanying drawings so that those with ordinary knowledge in a technical field to which the present invention belongs can implement the present invention with reference to descriptions of the specification of the present invention. If there are descriptions involving "first", "second", etc., for preferred embodiments of the present invention, the descriptions of "first", "second", etc., are used for descriptive purposes only and cannot be understood as indicating or implying their relative significance, or as implicit indication of a quantity of indicated technical features. Therefore, features defined and depicted as "first" and "second" may be considered explicitly or implicitly that at least one of the features is included.

In descriptions of the present invention, it should further be explained that, unless there are more explicit definitions and limitations, the terms of "disposing" and "connection" should be understood in a much broader sense. For example, "connection" can be a disposing connection, and can also be a dismantlable connection or an integral connection. Besides, "connection" can be a mechanical connection or can also be an electrical connection. Meanwhile, "connection" can be a direct connection or an indirect connection through an intermediate medium, or can be an internal connection between two components. For those with ordinary knowledge in a technical field to which the present invention belongs, specific meanings of the above terms in a disclosure of the present invention can be understood based on actual situations.

In addition, if "and/or" appears in descriptions of the present invention, its meaning includes three juxtaposed solutions. Taking "A and/or B" as an example, its meaning includes a solution of A being solely included, a solution of B being solely included, or a solution of A and B being simultaneously satisfied. In addition, technical solutions in various preferred embodiments of the present invention can be combined with each other, but the combination must be based on a fact that a person with ordinary knowledge in the technical field to which the invention belongs can realize the combination. When the combination of the above technical solutions is contradictory to each of the above technical solutions or cannot be realized, the combination of the above technical solutions should be considered as if the combination does not exist, and should also be not within a protection scope intended for the present invention.

In following descriptions, technical solutions of the present invention are described in detail with reference to the accompanying drawings. Devices described below or operating methods thereof are only used to illustrate the preferred embodiments of the present invention and are not used to define a scope of the present application. Furthermore, the same reference numbers depicted in the specification of the present invention refer to the same components, respectively.

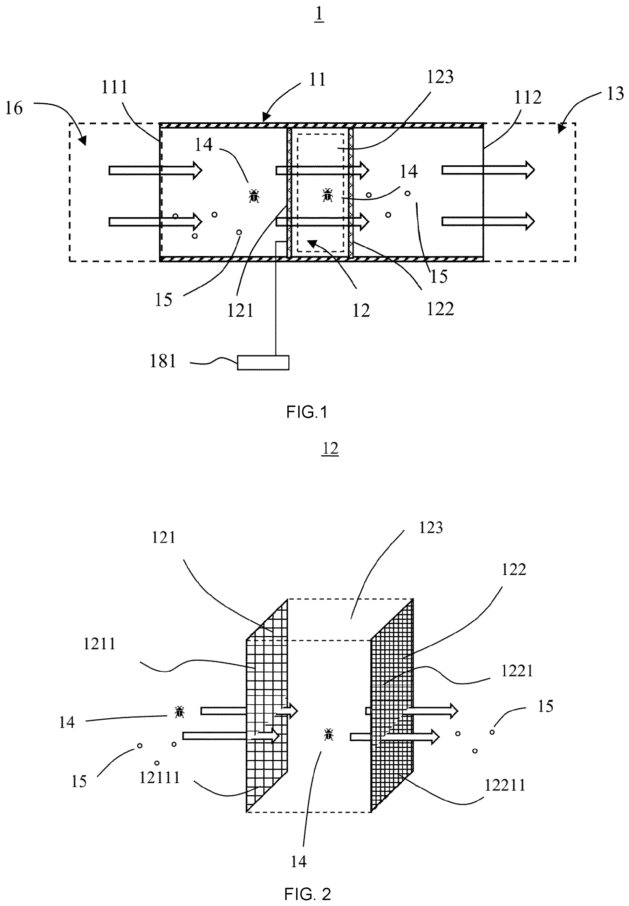

Please refer firstly to FIG. 1, FIG. 1 shows a schematic cross-sectional view of a vacuum suction adapter device 1 with an electric shock module in accordance with a preferred embodiment of the present invention. The vacuum suction adapter device 1 with the electric shock module includes an adapter main body 11 and an electric shock module12. The electric shock module12 is disposed in the adapter main body 11. The adapter main body 11 is a hollow case having an air inlet 111 and an air outlet 112 at each end. The air outlet 112 is detachably connected with a suction main body 13, negative pressure is formed inside the adapter main body11 to make the outside air flow into the adapter main body 11 from the air inlet 111 and to be expelled from the air outlet 112. The suction main body 13 can be included but not limited to all kinds of vacuum cleaners. The vacuum cleaner is an electrical appliance configured to suction air containing dust by suction generated by a suction motor installed in the vacuum cleaner, and to filter dust by controlling a dust filter. Whether the vacuum cleaner is a canister vacuum cleaner, an upright vacuum cleaner, or a handheld vacuum cleaner does not affect the scope of protection in the present invention. The air inlet 111 can be detachably connected with a suction nozzle 16. The suction nozzle 16 can be included but not limited to all kinds of vacuum cleaner accessories, such as elliptical PP bristle curtain brushes, square horsehair floor brushes, flexible flat suction heads, squeegee suction brush heads, pneumatic bed sheet suction heads, and other commonly available vacuum cleaner accessories. The vacuum suction adapter device with an electric shock module 11 of the present invention is an optionally attachable accessory for vacuum cleaners. In other words, the vacuum cleaner can still perform its original suction function even without this vacuum suction adapter device with an electric shock module1.

In this embodiment, the electric shock module 12 includes a first electrode 121 and a second electrode 122 isolated and spaced from each other. An electric shock area 123 is formed between the first electrode 121 and the second electrode 122. A fixed structure (not shown in the figure) is in the interior wall of the adapter main body 11. The fixed structure can fix the electric shock module 12 inside the adapter main body 11. Air flows into the adapter main body 11 from the air inlet 111, passes through the first electrode 121, the electric shock area 123, the second electrode 122 sequentially, and then to be expelled from the air outlet 112.

Please refer to FIG. 1 and FIG 2, FIG 2 is a schematic perspective view of the electric shock module 12 in FIG. 1. The first electrode 121 is a first metal mesh 1211 including first apertures 12111. The second electrode 122 is a second metal mesh 1221 including second apertures 12211. Air flows through the electric shock area 123 from the first apertures 12111, and then flows out from the second apertures 12211 to be expelled from the air outlet 112. The first apertures 12111 is larger than the second apertures 12211. Electrically shocked objects 14 flow into the adapter main body 11 with the external air from the air inlet 111. The electrically shocked objects 14 can pass through the first apertures 12111 of the first metal mesh 1211 and enter the electric shock area 123. However, most of the electrically shocked objects 14 cannot pass through the second apertures 12211 due to the sizes of the electrically shocked objects 14 are larger than the second apertures 12211. The electrically shocked objects 14 are blocked by the second metal mesh 1221 and stay in the second metal mesh 1221. The electric voltage boost module 181 is electrically connected with the electric shock module 12 in order to electrically power the electric shock module 12 for electrical discharge under high electric voltages. In the embodiment, when the electrically shocked objects 14 flow through the electric shock area 123, electrical discharge under high electric voltages and generation of electric arc sparks are caused between the first electrode 121 and the second electrode 122 by the electrically shocked objects 14. The electrically shocked objects 14 have larger dimensions compared to typical dust or suspended particles (sucked objects 15). The electrically shocked objects 14 can be exemplified but are not limited to common insects such as cockroaches, ants, etc., which have tissue fluids that have weak electroconductivity and can generate current or sparks in the electric shock area 123. As long as the electrically shocked objects 14 can pass through the first apertures 12111 of the first metal mesh 1211 and enter the electric shock area 123 but is blocked by the second metal mesh 1221 and stay in the second metal mesh 1221, considered as the electrically shocked objects 14 described in the invention. The sucked objects 15 described in the invention refer to typical dust or suspended particles. When the sucked objects 15 flow through the electric shock area 223, electrical discharge under high electric voltages and generation of electric arc sparks are not caused between the first electrode 121 and the second electrode 122.

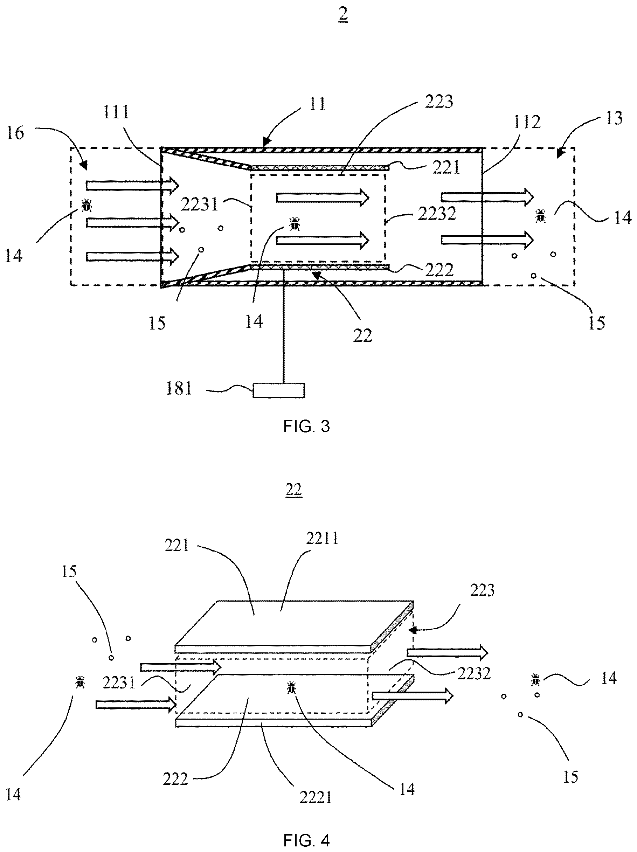

Please refer to FIG. 3, FIG. 3 shows a schematic cross-sectional view of a vacuum suction adapter device 2 equipped with an electric shock module in accordance with another preferred embodiment of the present invention. The vacuum suction adapter device 2 with the electric shock module includes an adapter main body 11 and an electric shock module 22. The electric shock module 22 is disposed in the adapter main body 11. Please further refer to FIG. 4, FIG. 4 shows a schematic perspective view of the electric shock module 22 in FIG. 3. The electric shock module 22 includes a first electrode 221 and a second electrode 222 isolated and spaced from each other. An electric shock area 223 is formed between the first electrode 221 and the second electrode 222. Difference between an implement method of the electric shock module 22 of another preferred embodiment and an implement method of the electric shock module 12 of the previous preferred embodiment is as follows. A first electrode 221 of the electric shock module 22 is a first metal piece 2211. A second electrode 222 of the electric shock module 22 is a second metal piece 2221. The first metal piece 2211 and the second metal piece 2221 are metal plates or metal sheet. There are no mesh-like spaced gaps or apertures on the first metal piece 2211 and the second metal piece 2221 to allow air to pass through. The feature of the embodiment is the first electrode 221 and the second electrode 222 are placed along the direction of airflow and an electric shock area 223 is formed between the first electrode 221 and the second electrode 222 which are isolated and spaced from each other to allow air flowing through the electric shock area 223. A space of the electric shock area 223 is defined and surrounded by the first metal piece 12211 and the second metal piece 2221. The electric shock area 1223 is a fluid flowing path, and fluid flowing walls surrounding the electric shock area 223 are constituted by the first metal piece 2211 and the second metal piece 2221. The electrically shocked object 14 can be electrically shocked for many times during a process of the electrically shocked object 14 flowing through the electric shock area 223. An electric shock area inlet 2231 is formed commonly by the first metal piece 2211 and the second metal piece 2221 at a side of the first metal piece 2211 and a side of the second metal piece 2221 near the air inlet 111. An electric shock area outlet 2232 is formed commonly by the first metal piece 2211 and the second metal piece 2221 at a side of the first metal piece 2211 and a side of the second metal piece 2221 near the air outlet 112. The shocked object 14 flows into the electric shock area 223 from the electric shock area inlet 2231, and flow out of the electric shock area 223 from the electric shock area outlet 2232. The electrically shocked objects 14 have larger dimensions compared to typical dust or suspended particles (sucked objects 15). The electrically shocked objects 14 can be exemplified but are not limited to common insects such as cockroaches, ants, etc., which have tissue fluids that have weak electroconductivity and can generate current or sparks in the electric shock area 223. In the embodiment, when the electrically shocked object 14 flows through the electric shock area 223, electrical discharge under high electric voltages and generation of electric arc sparks are caused between the first electrode 221 and the second electrode 222. The sucked objects 15 described in the invention refer to typical dust or suspended particles. When the sucked objects 15 flows through the electric shock area 223, electrical discharge under high electric voltages and generation of electric arc sparks are not caused between the first electrode 221 and the second electrode 222.

As shown in FIG. 3, the inner diameter of the adapter main body 11 can be gradually decreased or the adapter main body 11 is gradually inwardly shrunk from the air inlet 111 toward the electric shock area inlet 2231 to form a shape of the adapter main body 11 as a funnel. An exit of the funnel-like adapter main body 11 is spatially communicated with the electric shock area inlet 2231. Understandably, positioning ways, locations and shapes of the first metal piece 2211 and the second metal piece 2221 are not limited to disclosure of FIG. 4. As long as the first electrode 221 and the second electrode 222 can be isolated and spaced from each other, the electric voltage boost module 181 can electrically power the electric shock module 22 for electrical discharge under high electric voltages and cause electrical discharge under high electric voltages between the first electrode 221 and the second electrode 222 to generate electric arc sparks when the electrically shocked object 14 flows through the electric shock area 223, and the electrically shocked object 14 can flow out via the air outlet 112 after the electrically shocked object 14 is electrically shocked, any equivalents of the disclosed positioning ways, locations and shapes of the first metal piece 2211 and the second metal piece 2221 are in the scope of the present invention. The scope of protection is defined by the claims.

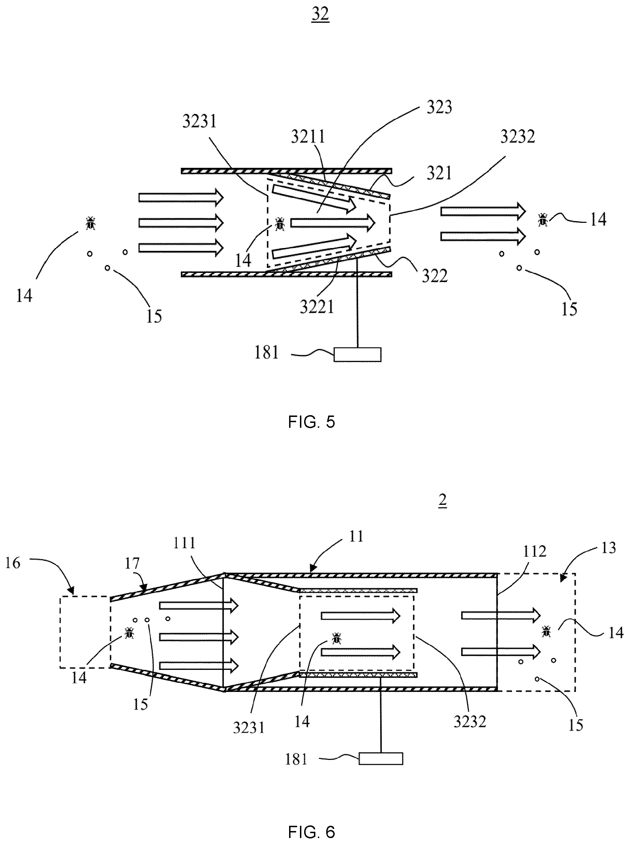

Please refer to FIG. 5, FIG. 5 shows a schematic cross-sectional view of an electric shock module 32 in accordance with another preferred embodiment of the present invention. The electric shock module 32 includes a first electrode 321 and a second electrode 322 isolated and spaced from each other. An electric shock area 323 is formed between the first electrode 321 and the second electrode 322. The first electrode 321 of the electric shock module 32 is a first metal piece 3211, and the second electrode 322 is a second metal piece 3221. An electric shock area inlet 3231 is formed commonly by the first metal piece 3211 and the second metal piece 3221 at a side of the first metal piece 3211 and a side of the second metal piece 3221 near the air inlet 111. An electric shock area outlet 3232 is formed by the first metal piece 3211 and the second metal piece 3221 at a side of the first metal piece 3211 and a side of the second metal piece 3221 near the air outlet 112. The electrically shocked object 14 flows into the electric shock area 323 via the electric shock area inlet 3231, and flows out of the electric shock area 323 via the electric shock area outlet 3232. Difference between an implement method of the electric shock module 32 of the another preferred embodiment and an implement method of the electric shock module 22 of the previous preferred embodiment is as follows. The electric shock area inlet 3231 is designated to be larger than the electric shock area outlet 3232. The air flows from the electric shock area inlet 3231 with a larger area to the electric shock area outlet 3232 with a smaller area. The electric shock area inlet 3231 with the larger area can facilitate easier entry of the electrically shocked object 14 into the electric shock area 323. The electric shock area outlet 3232 with the smaller area facilitates generation of a gain effect of electric shocks. Hence, the electrically shocked object 14 can be ensured to be effectively electrically shocked before the electrically shocked object 14 leave the electric shock area 323. The electrically shocked object 14 after being electrically shocked can be expelled via the air outlet 112.

In the implement method as shown respectively in FIGS. 3-5, although the electric shock area 223 of the previous preferred embodiment is formed between the first electrode 221 and the second electrode 22 which are approximately parallel to each other, an effect of having a larger sucking face can be achieved by forming different inner diameters inside the adapter main body 11. For instance, as shown in FIG. 3, an inner diameter of the adapter main body 11 can be gradually decreased or the adapter main body 11 is gradually inwardly shrunk from the air inlet 111 toward the electric shock area inlet 2231 to form a shape of the adapter main body 11 as a funnel. An exit of the funnel-like adapter main body 11 is spatially communicated with the electric shock area inlet 2231 in order to achieve an effect of easy entry of the electrically shocked object 14 through an entrance of the adapter main body 11 with a large area, and an effect of the electrically shocked object 14 being effectively electrically shocked in the electric shock area outlet 2232. In the implement method as shown in FIG. 5, the funnel-shaped electric shock area 323 is directly formed via being surrounded by the first electrode 321 and the second electrode 322 in order to achieve the effect of easy entry of the electrically shocked object 14 through the electric shock area inlet 3231 with a large area, and the effect of the electrically shocked object 14 being effectively electrically shocked in the electric shock area outlet 3232.

The scope of protection is defined by the claims.

According to fluid mechanics for air, a suck force will be increased when an air entrance has a smaller area. One of main purposes of the implement methods of the preferred embodiments of the present invention is to effectively shock the electrically shocked object 14. Hence, the above purpose of electric shock can be easily achieved by the electric shock area inlet 3231 being formed to be larger than the electric shock area outlet 3232, or the area of the air inlet 111 being formed to be larger than the area of the electric shock area inlet 3231. In order to increase a suction force, a power of the suction main body 13 can be enlarged, or a suction head 17 having a suction inlet with a smaller area can be added in front of the air inlet 111, as shown in FIG. 6. FIG. 6 shows the vacuum suction adapter device equipped with an electric shock module 2 can be equipped with a suction head 17 connected in front of the air inlet 111. A cross-sectional area of the suction head 17 is gradually shrunk from the air inlet 111 toward an outer suction inlet of the suction head 17. All variations of the preferred embodiments should be able to achieve the purpose of the electrically shocked object 14 to be sucked being effectively electrically shocked by conforming with result structures that the electric shock area inlet 3231 is larger than the electric shock area outlet 3232, or that the area of the air inlet 111 is larger than the area of the electric shock area inlet 3231. Understandably, the vacuum suction adapter device 1,2 equipped with an electric shock module, provided in the invention achieve both the purposes of easy entry of the electrically shocked object 14 and effective electric shock of the electrically shocked object 14 without conflict. On the contrary, a design for achieving the purpose of easy entry and effective electric shock can be used to assist achievement of the purpose of increase of suction forces, or vice versa, when there is any requirement.

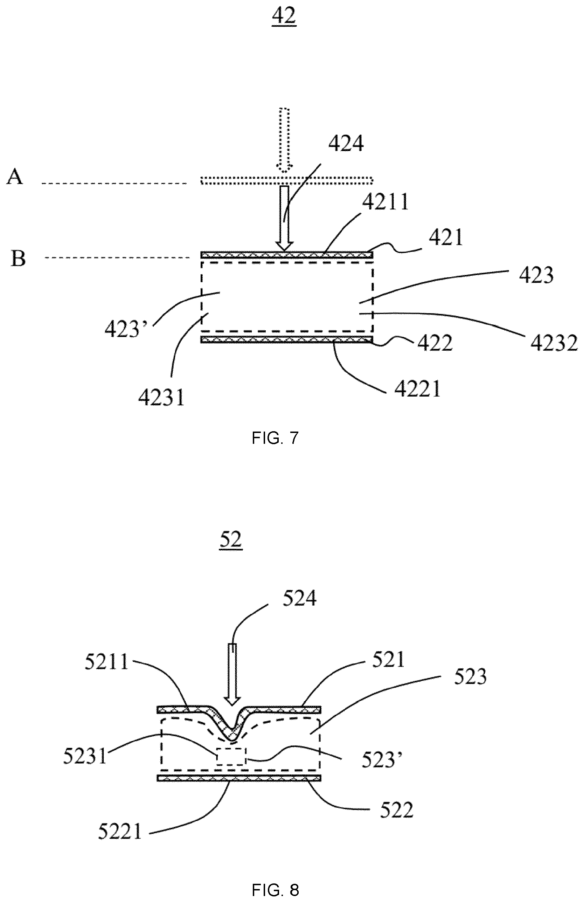

Please refer to FIG. 7 and FIG 3, FIG. 7 shows an electric shock module 42 in accordance with another preferred embodiment of the present invention. The electric shock module 42 includes a first electrode 421 and a second electrode 422 isolated and spaced from each other. An electric shock area 423 is formed between the first electrode 421 and the second electrode 422. The first electrode 421 of the electric shock module 42 is constituted by a first metal piece 4211, and the second electrode 1422 is constituted by a second metal piece 4221. An electric shock area inlet 4231 is formed commonly by the first metal piece 4211 and the second metal piece 4221 at a side of the first metal piece 4211 and a side of the second metal piece 4221 near the air inlet 111. An electric shock area outlet 4232 is formed by the first metal piece 4211 and the second metal piece 4221 at a side of the first metal piece 4211 and a side of the second metal piece 4221 near the air outlet 112. The electrically shocked object 14 flows into the electric shock area 423 via the electric shock area inlet 4231, and flows out of the electric shock area 423 via the electric shock area outlet 4232. Difference between the electric shock module 42 of the another preferred embodiment and the electric shock module 22 of the previous preferred embodiment is as follows. The electric shock module 42 of the another preferred embodiment further includes an electrode position adjusting control unit 424. The electrode position adjusting control unit 424 can be used to adjust and control the first metal piece 4211 moving from a position A to a position B. When the first electrode 421 is located in the position A, a spacing distance between the first electrode 421 and the second electrode 422 is larger than a distance between the first electrode 421 and the second electrode 422 capable of causing electrical discharge under high electric voltages and generation of electric arc sparks. When the first electrode 421 moves to the position B, the electric shock area 423 capable of causing electrical discharge under high electric voltages and generation of electric arc sparks is formed. Understandably, in another preferred embodiment of the present invention, when the first electrode 421 is located in the position A, the spacing distance between the first electrode 421 and the second electrode 422 is capable of causing electrical discharge under high electric voltages and generation of electric arc sparks. When the first electrode 421 moves to the position B, an electric shock area 423' having a decreased volume is formed to achieve an effect of a gain of electric shocks. In the another preferred embodiment of the present invention, the first metal piece 4211 and the second metal piece 4221 displace relatively to each other in an approximately parallel manner. In other words, a size change of the electric shock area inlet 4231 and a size change of the electric shock area outlet 4232 is the same. Understandably, in another preferred embodiment of the present invention, the first metal piece 4211 and the second metal piece 4221 are arranged to enable the size change of the electric shock area inlet 2231 being different from the size change of the electric shock area outlet 3232. As long as the electrically shocked object 14 can be achieved to be effectively electrically shocked, and the electrically shocked object 14 can be expelled via the air outlet 112 after the electrically shocked object 14 is electrically shocked, any arrangement of the first metal piece 4211 and the second metal piece 4221 possible. The scope of protection is defined by the claims.

Please refer to FIG. 8, FIG. 8 shows an electric shock module 52 in accordance with another preferred embodiment of the present invention. The electric shock module 52 includes a first electrode 521 and a second electrode 522 isolated and spaced from each other. An electric shock area 523 is formed between the first electrode 521 and the second electrode 522. Difference between the electric shock module 52 of the another preferred embodiment and the electric shock modules42 of the previous preferred embodiments is as follows. The first electrode 521 of the electric shock module 52 is constituted by a flexible metal piece 5211. The second electrode 522 is constituted by a second metal piece 5221. An electrode position adjusting control unit 524 can be used to adjust and control a flexible extent of the flexible metal piece 5211 toward the second metal piece 5221. An electric shock gain zone 5231 is generated at a location where the first electrode 521 and the second electrode 522 are closer to each other. The electric shock gain zone 5231 can be used to enhance a successful effect of electric shocks. Understandably, a location of the flexible metal piece 5211 to be adjusted and controlled by the electrode position adjusting control unit 524 is not limited to a middle of the flexible metal piece 5211. Understandably, in another preferred embodiment of the present invention, when the first electrode 521 is in an original position thereof, a spacing distance between the first electrode 521 and the second electrode 522 is larger than a distance between the first electrode 521 and the second electrode 522 capable of causing electrical discharge under high electric voltages and generation of electric arc sparks. In other words, when the first electrode 521 is in the original position thereof, the electric shock area 523 does not exist. When the first electrode 521 is moved to a flexible position thereof, a spacing distance between the first electrode 521 and the second electrode 522 reaches the distance between the first electrode 521 and the second electrode 522 to form an electric shock area 523' capable of causing electrical discharge under high electric voltages and generation of electric arc sparks.

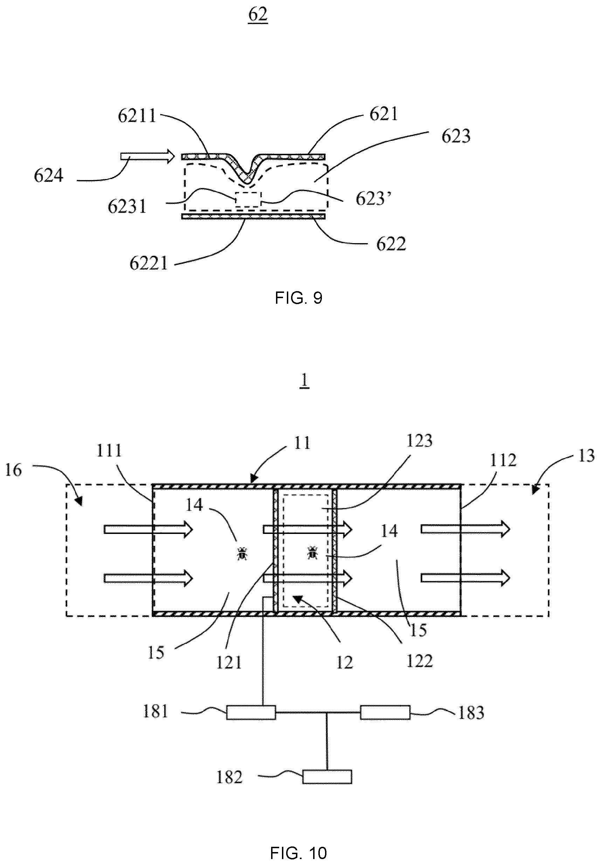

Please refer to FIG. 9 and FIG 3, FIG. 9 shows an electric shock module 62 in accordance with another preferred embodiment of the present invention. The electric shock module 62 includes a first electrode 621 and a second electrode 622 isolated and spaced from each other. An electric shock area 623 is formed between the first electrode 621 and the second electrode 622. The first electrode 621 of the electric shock module 62 is constituted by a flexible metal piece 6211. The second electrode 622 can be constituted by a second metal piece 6221. Difference between the electric shock module 62 of the another preferred embodiment and the electric shock module 52 of the previous preferred embodiment is as follows. An electrode position adjusting control unit 624 is disposed in an axial position of the first electrode 621 close to the air inlet 111. The electrode position adjusting control unit 624 adjusts and controls a flexible moving extent of the flexible metal piece 6211 in a push-to-bend manner. An electric shock gain zone 6231 is generated at a location where the first electrode 621 and the second electrode 622 are closer to each other in order to enhance a successful effect of electric shocks. Understandably, in another preferred embodiment of the present invention, when the first electrode 621 is in an original position thereof, a spacing distance between the first electrode 621 and the second electrode 622 is larger than a distance between the first electrode 621 and the second electrode 622 capable of causing electrical discharge under high electric voltages and generation of electric arc sparks. In other words, when the first electrode 621 is in the original position thereof, the electric shock area 623 does not exist. When the first electrode 621 is moved to a flexible position thereof, a spacing distance between the first electrode 621 and the second electrode 622 reaches the distance between the first electrode 621 and the second electrode 622 to form an electric shock area 623' capable of causing electrical discharge under high electric voltages and generation of electric arc sparks.

The vacuum suction adapter devices 1, 2 with an electric shock module in accordance with the present invention further include an electric voltage boost module 181 respectively. The electric voltage boost module 181 is electrically connected with the electric shock modules 12, 22, 32, 42, 52, 62 and is capable of boosting electric voltages respectively between the first electrodes 121, 221, 321, 421, 521, 621 and the second electrodes 122, 222, 322, 422, 522, 622 up to more than 1,000 volts (a voltage to electrically shock through air is approximately 5kV/cm). A boost electric energy for the electric shock modules 12, 22, 32, 42, 52, 62 is also stored in a capacitor. When the electrically shocked object 14 enters the electric shock areas 123, 223, 323, 423, 423' 523, 523', 623, 623', electron ionization is generated to lower an electric resistance in the air. Electric currents flow toward a shortest path to trigger electrical discharge of the capacitor storing the high-voltage electric energy and generation of electric arc sparks for stunning or killing insects by electrical shocks.

In another preferred embodiment of the present invention, the vacuum suction adapter devices 1, 2 with an electric shock module can further respectively include a control switch 182 and a battery module 183. The battery module 183 is rapidly dismantlably electrically connected with the electric voltage boost module 181 to supply power to the electric voltage boost module 181. In another preferred embodiment of the present invention, the control switch 182 is used to control power supplies of the electric shock modules12, 22, 32, 42, 52, 62 respectively. Understandably, if the power supplies of the electric shock modules 12, 22, 32, 42, 52, 62 are shut down, an original vacuum suction function of the vacuum suction devices 1, 2 will not be affected, and the suction main body 13 can still be used normally. The electric voltage boost module 181, the control switch 182 and the battery module 183 described in the another preferred embodiment of the present invention are located outside the suction main body 13. However, it can be understood that installation positions of the electric voltage boost module 181, the control switch 182 and the battery module 183 do not affect a scope intended to be protected in the present invention.

In another preferred embodiment of the present invention, the vacuum suction adapter devices 1, 2 with an electric shock module can further include a battery module 183. The battery module 183 is rapidly dismantlably electrically connected with the electric voltage boost module 181 to supply power to the electric voltage boost module 181. Understandably, the battery module 183 can only supply power to the vacuum suction adapter devices 1, 2 or can both supply power to the suction main body 13 and the vacuum suction adapter devices 1, 2 with an electric shock module.

The above detailed descriptions are provided as an explicit illustration's description of feasible preferred embodiments of the present invention. Therefore, they are not used to limit a claimed scope of the present invention. The scope of protection is defined by the claims.

## Claims

1. A vacuum suction adapter device (1) equipped with an electric shock module (12, 22, 32, 42, 52, 62), comprising:
an adapter main body (11) comprising an air inlet (111) and an air outlet (112), the air outlet (112) being detachably connected with a suction main body (13), negative pressure being formed inside the adapter main body (11), and the air inlet (111) being detachably connected with a suction nozzle (16), air flows into the adapter main body (11) from the air inlet (111) and to be expelled from the air outlet (112),
**characterized in that,**
the electric shock module (12, 22, 32, 42, 52, 62) is disposed in the adapter main body (11), and used to electrically discharge under high electric voltages for generating electric arc sparks, wherein
an electric voltage boost module (181) is electrically connected with the electric shock module (12, 22, 32, 42, 52, 62) to electrically power the electric shock module (12, 22, 32, 42, 52, 62) for electrical discharge under the high electric voltages,
wherein the electric shock module (12, 22, 32, 42, 52, 62) comprises a first electrode (121, 221, 321, 421, 521, 621) and a second electrode (122, 222, 322, 422, 522, 622) isolated and spaced from each other, an electric shock area (123, 223, 323, 423, 423', 523, 523', 623, 623') is formed between the first electrode (121, 221, 321, 421, 521, 621) and the second electrode (122, 222, 322, 422, 522, 622), the air flows through the electric shock area (123, 223, 323, 423, 423', 523, 523', 623, 623') and to be expelled from the air outlet (112).

2. The vacuum suction adapter device (1) equipped with an electric shock module (12, 22, 32, 42, 52, 62) as claimed in claim 1, wherein when an electrically shocked object (14) flows into the electric shock area (123, 223, 323, 423, 423', 523, 523', 623, 623'), the electrical discharge under the high electric voltages and generation of the electric arc sparks are caused between the first electrode (121, 221, 321, 421, 521, 621) and the second electrode (122, 222, 322, 422, 522, 622).

3. The vacuum suction adapter device (1) equipped with an electric shock module (12) as claimed in claim 2, wherein the first electrode (121) is a first metal mesh (1211) comprising first apertures (12111), and the second electrode (122) is a second metal mesh (1221) comprising second apertures (12211), the air flows from the first apertures (12111) through the electric shock area (123) and flows out from the second apertures (12211) to be expelled from the air outlet (112).

4. The vacuum suction adapter device (1) equipped with an electric shock module (12) as claimed in claim 3, wherein the first apertures (12111) are larger than the second apertures (12211), the electrically shocked object (14) is allowed to pass through the first apertures (12111) but not through the second apertures (12211).

5. The vacuum suction adapter device (1) equipped with an electric shock module (12, 22, 32, 42, 52, 62) as claimed in claim 2, wherein the first electrode (121, 221, 321, 421, 521, 621) is a first metal piece (2211, 3211, 4211, 5211, 6211), and the second electrode (122, 222, 322, 422, 522, 622) is a second metal piece (2221, 3221, 4221, 5221, 6221), a space of the electric shock area (123, 223, 323, 423, 423', 523, 523', 623, 623') is defined and surrounded by the first metal piece (2211, 3211, 4211, 5211, 6211) and the second metal piece (2221, 3221, 4221, 5221, 6221), an electric shock area inlet (2231, 3231, 4231) is formed commonly by the first metal piece (2211, 3211, 4211, 5211, 6211) and the second metal piece (2221, 3221, 4221, 5221, 6221) at a side of the first metal piece (2211, 3211, 4211, 5211, 6211) and a side of the second metal piece (2221, 3221, 4221, 5221, 6221) near the air inlet (111), an electric shock area outlet (2232, 3232, 4232) is formed commonly by the first metal piece (2211, 3211, 4211, 5211, 6211) and the second metal piece (2221, 3221, 4221, 5221, 6221) at a side of the first metal piece (2211, 3211, 4211, 5211, 6211) and a side of the second metal piece (2221, 3221, 4221, 5221, 6221) near the air outlet (112), the electrically shocked object (14) enters the electric shock area inlet (2231, 3231, 4231) to get into the space of the electric shock area (123, 223, 323, 423, 423', 523, 523', 623, 623') and to be electrically shocked for many times, and flows out of the electric shock area (123, 223, 323, 423, 423', 523, 523', 623, 623') from the electric shock area outlet (2232, 3232, 4232) to be expelled from the air outlet (112).

6. The vacuum suction adapter device (1) equipped with an electric shock module (12, 22, 32, 42, 52, 62) as claimed in claim 5, further comprising a suction head (17) connected in front of the air inlet (111), and a cross-sectional area of the suction head (17) being gradually shrunk from the air inlet (111) toward an outer suction inlet of the suction head (17).

7. The vacuum suction adapter device (1) equipped with an electric shock module (12, 22, 32, 42, 52, 62) as claimed in claim 5, wherein the electric shock area inlet (2231, 3231, 4231) is larger than the electric shock area outlet (2232, 3232, 4232).

8. The vacuum suction adapter device equipped with an electric shock module (12, 22, 32, 42, 52, 62) as claimed in claim 5, further comprising an electrode position adjusting control unit (424, 524, 624) to make the first electrode (121, 221, 321, 421, 521, 621) and the second electrode (122, 222, 322, 422, 522, 622) moving relatively to each other in order to change a size of the electric shock area (123, 223, 323, 423, 423', 523, 523', 623, 623').

9. The vacuum suction adapter device (1) equipped with an electric shock module (52, 62) as claimed in claim 8, wherein the first electrode is a flexible metal piece, the flexible metal piece is flexibly bent and deformed so that the first electrode (521, 621) is moved close to the second electrode (522, 622) without being in contact with the second electrode (522, 622).

10. The vacuum suction adapter device (1) equipped with an electric shock module (52, 62) as claimed in claim 9, wherein an electric shock gain zone (5231, 6231) is generated where the flexible metal piece is flexibly bent and deformed.

11. The vacuum suction adapter device (1) equipped with an electric shock module (12, 22, 32, 42, 52, 62) as claimed in claim 1, further comprising a control switch (182), wherein the control switch (182) is electrically connected with the electric voltage boost module (181) to control power supplies of the electric shock module (12, 22, 32, 42, 52, 62).

12. The vacuum suction adapter device (1) equipped with an electric shock module (12, 22, 32, 42, 52, 62) as claimed in claim 11, further comprising a battery module (183), wherein the battery module (183) is rapidly dismantlably electrically connected with the electric voltage boost module (181) to supply power to the electric voltage boost module (181).

13. The vacuum suction adapter device (1) equipped with an electric shock module (12, 22, 32, 42, 52, 62) as claimed in claim 1, further comprising a battery module (183), wherein the battery module (183) is rapidly dismantlably electrically connected with the electric voltage boost module (181) to supply power to the electric voltage boost module (181).

## Patentansprüche

1. Vakuumsaug-Adaptervorrichtung (1), ausgestattet mit einem Elektroschockmodul (12, 22, 32, 42, 52, 62), umfassend:
einen Adapterhauptkörper (11), umfassend einen Lufteinlass (111) und einen Luftauslass (112), wobei der Luftauslass (112) lösbar mit einem Saughauptkörper (13) verbunden ist, im Inneren des Adapterhauptkörpers (11) ein Unterdruck gebildet wird, und der Lufteinlass (111) lösbar mit einer Saugdüse (16) verbunden ist, Luft in den Adapterhauptkörper (11) vom Lufteinlass (111) einströmt und aus dem Luftauslass (112) ausgestoßen wird,
**dadurch gekennzeichnet, dass**
das Elektroschockmodul (12, 22, 32, 42, 52, 62) im Adapterhauptkörper (11) angeordnet ist und dazu verwendet wird, unter hohen elektrischen Spannungen elektrische Entladungen zur Erzeugung von Lichtbogenfunken durchzuführen, wobei
ein elektrisches Spannungsanhebungsmodul (181) elektrisch mit dem Elektroschockmodul (12, 22, 32, 42, 52, 62) verbunden ist, um das Elektroschockmodul (12, 22, 32, 42, 52, 62) mit elektrischer Leistung für elektrische Entladungen unter den hohen elektrischen Spannungen zu versorgen,
wobei das Elektroschockmodul (12, 22, 32, 42, 52, 62) eine erste Elektrode (121, 221, 321, 421, 521, 621) und eine zweite Elektrode (122, 222, 322, 422, 522, 622), die voneinander isoliert und beabstandet sind, umfasst, ein Elektroschockbereich (123, 223, 323, 423, 423', 523, 523', 623, 623') zwischen der ersten Elektrode (121, 221, 321, 421, 521, 621) und der zweiten Elektrode (122, 222, 322, 422, 522, 622) gebildet ist, die Luft durch den Elektroschockbereich (123, 223, 323, 423, 423', 523, 523', 623, 623') strömt und aus dem Luftauslass (112) ausgestoßen wird.

2. Vakuumsaug-Adaptervorrichtung (1) ausgestattet mit einem Elektroschockmodul (12, 22, 32, 42, 52, 62) nach Anspruch 1, wobei, wenn ein elektrisch geschocktes Objekt (14) in den Elektroschockbereich (123, 223, 323, 423, 423', 523, 523', 623, 623') gelangt, die elektrische Entladung unter den hohen elektrischen Spannungen und die Erzeugung der Lichtbogenfunken zwischen der ersten Elektrode (121, 221, 321, 421, 521, 621) und der zweiten Elektrode (122, 222, 322, 422, 522, 622) verursacht werden.

3. Vakuumsaug-Adaptervorrichtung (1) ausgestattet mit einem Elektroschockmodul (12) nach Anspruch 2, wobei die erste Elektrode (121) ein erstes Metallgitter (1211) mit ersten Öffnungen (12111) ist und die zweite Elektrode (122) ein zweites Metallgitter (1221) mit zweiten Öffnungen (12211) ist, die Luft aus den ersten Öffnungen (12111) durch den Elektroschockbereich (123) strömt und aus den zweiten Öffnungen (12211) ausströmt, um aus dem Luftauslass (112) ausgestoßen zu werden.

4. Vakuumsaug-Adaptervorrichtung (1) ausgestattet mit einem Elektroschockmodul (12) nach Anspruch 3, wobei die ersten Öffnungen (12111) größer als die zweiten Öffnungen (12211) sind, das elektrisch geschockte Objekt (14) durch die ersten Öffnungen (12111) hindurchtreten darf, jedoch nicht durch die zweiten Öffnungen (12211).

5. Vakuumsaug-Adaptervorrichtung (1) ausgestattet mit einem Elektroschockmodul (12, 22, 32, 42, 52, 62) nach Anspruch 2, wobei die erste Elektrode (121, 221, 321, 421, 521, 621) ein erstes Metallstück (2211, 3211, 4211, 5211, 6211) ist und die zweite Elektrode (122, 222, 322, 422, 522, 622) ein zweites Metallstück (2221, 3221, 4221, 5221, 6221) ist, ein Raum des Elektroschockbereichs (123, 223, 323, 423, 423', 523, 523', 623, 623') durch das erste Metallstück (2211, 3211, 4211, 5211, 6211) und das zweite Metallstück (2221, 3221, 4221, 5221, 6221) definiert und umgeben ist, ein Einlass des Elektroschockbereichs (2231, 3231, 4231) gemeinsam durch das erste Metallstück (2211, 3211, 4211, 5211, 6211) und das zweite Metallstück (2221, 3221, 4221, 5221, 6221) an einer Seite des ersten Metallstücks (2211, 3211, 4211, 5211, 6211) und einer Seite des zweiten Metallstücks (2221, 3221, 4221, 5221, 6221) nahe dem Lufteinlass (111) gebildet ist, ein Auslass des Elektroschockbereichs (2232, 3232, 4232) gemeinsam durch das erste Metallstück (2211, 3211, 4211, 5211, 6211) und das zweite Metallstück (2221, 3221, 4221, 5221, 6221) an einer Seite des ersten Metallstücks (2211, 3211, 4211, 5211, 6211) und einer Seite des zweiten Metallstücks (2221, 3221, 4221, 5221, 6221) nahe dem Luftauslass (112) gebildet ist, das elektrisch geschockte Objekt (14) den Einlass des Elektroschockbereichs (2231, 3231, 4231) betritt, um in den Raum des Elektroschockbereichs (123, 223, 323, 423, 423', 523, 523', 623, 623') zu gelangen und mehrfach elektrisch geschockt zu werden, und aus dem Auslass des Elektroschockbereichs (2232, 3232, 4232) des Elektroschockbereichs (123, 223, 323, 423, 423', 523, 523', 623, 623') ausströmt, um aus dem Luftauslass (112) ausgestoßen zu werden.

6. Vakuumsaug-Adaptervorrichtung (1) ausgestattet mit einem Elektroschockmodul (12, 22, 32, 42, 52, 62) nach Anspruch 5, ferner umfassend einen Saugkopf (17), der vor dem Lufteinlass (111) angeschlossen ist, und eine Querschnittsfläche des Saugkopfes (17), die sich vom Lufteinlass (111) zu einer äußeren Saugeinlassöffnung des Saugkopfes (17) allmählich verjüngt.

7. Vakuumsaug-Adaptervorrichtung (1) ausgestattet mit einem Elektroschockmodul (12, 22, 32, 42, 52, 62) nach Anspruch 5, wobei der Einlass des Elektroschockbereichs (2231, 3231, 4231) größer ist als der Auslass des Elektroschockbereichs (2232, 3232, 4232).

8. Vakuumsaug-Adaptervorrichtung (1) ausgestattet mit einem Elektroschockmodul (12, 22, 32, 42, 52, 62) nach Anspruch 5, ferner umfassend eine Elektrodenpositions-Steuerungseinheit (424, 524, 624), um die erste Elektrode (121, 221, 321, 421, 521, 621) und die zweite Elektrode (122, 222, 322, 422, 522, 622) relativ zueinander zu bewegen, um eine Größe des Elektroschockbereichs (123, 223, 323, 423, 423', 523, 523', 623, 623') zu verändern.

9. Vakuumsaug-Adaptervorrichtung (1) ausgestattet mit einem Elektroschockmodul (52, 62) nach Anspruch 8, wobei die erste Elektrode ein flexibles Metallstück ist, das flexible Metallstück flexibel gebogen und verformt ist, so dass die erste Elektrode (521, 621) nahe an die zweite Elektrode (522, 622) herangeführt wird, ohne mit der zweiten Elektrode (522, 622) in Kontakt zu kommen.

10. Vakuumsaug-Adaptervorrichtung (1) ausgestattet mit einem Elektroschockmodul (52, 62) nach Anspruch 9, wobei eine Elektroschock-Verstärkungszone (5231, 6231) erzeugt wird, wo das flexible Metallstück flexibel gebogen und verformt ist.

11. Vakuumsaug-Adaptervorrichtung (1) ausgestattet mit einem Elektroschockmodul (12, 22, 32, 42, 52, 62) nach Anspruch 1, ferner umfassend einen Steuerschalter (182), wobei der Steuerschalter (182) elektrisch mit dem elektrischen Spannungsanhebungsmodul (181) verbunden ist, um die Stromversorgung des Elektroschockmoduls (12, 22, 32, 42, 52, 62) zu steuern.

12. Vakuumsaug-Adaptervorrichtung (1) ausgestattet mit einem Elektroschockmodul (12, 22, 32, 42, 52, 62) nach Anspruch 11, ferner umfassend ein Batteriemodul (183), wobei das Batteriemodul (183) schnell lösbar elektrisch mit dem elektrischen Spannungsanhebungsmodul (181) verbunden ist, um das elektrische Spannungsanhebungsmodul (181) mit Strom zu versorgen.

13. Vakuumsaug-Adaptervorrichtung (1) ausgestattet mit einem Elektroschockmodul (12, 22, 32, 42, 52, 62) nach Anspruch 1, ferner umfassend ein Batteriemodul (183), wobei das Batteriemodul (183) schnell lösbar elektrisch mit dem elektrischen Spannungsanhebungsmodul (181) verbunden ist, um das elektrische Spannungsanhebungsmodul (181) mit Strom zu versorgen.

## Revendications

1. Dispositif adaptateur d'aspiration sous vide (1) équipé d'un module de choc électrique (12, 22, 32, 42, 52, 62), comprenant :
un corps principal d'adaptateur (11) comprenant une entrée d'air (111) et une sortie d'air (112), la sortie d'air (112) étant reliée de manière amovible à un corps principal d'aspiration (13), une pression négative étant formée à l'intérieur du corps principal d'adaptateur (11), et l'entrée d'air (111) étant reliée de manière amovible à une buse d'aspiration (16), l'air entrant dans le corps principal d'adaptateur (11) depuis l'entrée d'air (111) et étant expulsé depuis la sortie d'air (112),
**caractérisé en ce que**
le module de choc électrique (12, 22, 32, 42, 52, 62) est disposé dans le corps principal d'adaptateur (11), et utilisé pour effectuer une décharge électrique sous hautes tensions électriques afin de générer des étincelles d'arc électrique, dans lequel
un module d'élévation de tension électrique (181) est relié électriquement au module de choc électrique (12, 22, 32, 42, 52, 62) pour alimenter électriquement le module de choc électrique (12, 22, 32, 42, 52, 62) pour des décharges électriques sous les hautes tensions électriques,
dans lequel le module de choc électrique (12, 22, 32, 42, 52, 62) comprend une première électrode (121, 221, 321, 421, 521, 621) et une seconde électrode (122, 222, 322, 422, 522, 622) isolées et espacées l'une de l'autre, une zone de choc électrique (123, 223, 323, 423, 423', 523, 523', 623, 623') étant formée entre la première électrode (121, 221, 321, 421, 521, 621) et la seconde électrode (122, 222, 322, 422, 522, 622), l'air traversant la zone de choc électrique (123, 223, 323, 423, 423', 523, 523', 623, 623') et étant expulsé depuis la sortie d'air (112).

2. Dispositif adaptateur d'aspiration sous vide (1) équipé d'un module de choc électrique (12, 22, 32, 42, 52, 62) selon la revendication 1, dans lequel lorsqu'un objet électrochoqué (14) pénètre dans la zone de choc électrique (123, 223, 323, 423, 423', 523, 523', 623, 623'), la décharge électrique sous les hautes tensions électriques et la génération des étincelles d'arc électrique sont provoquées entre la première électrode (121, 221, 321, 421, 521, 621) et la seconde électrode (122, 222, 322, 422, 522, 622).

3. Dispositif adaptateur d'aspiration sous vide (1) équipé d'un module de choc électrique (12) selon la revendication 2, dans lequel la première électrode (121) est un premier treillis métallique (1211) comprenant des premières ouvertures (12111), et la seconde électrode (122) est un second treillis métallique (1221) comprenant des secondes ouvertures (12211), l'air s'écoulant depuis les premières ouvertures (12111) à travers la zone de choc électrique (123) et s'écoulant vers l'extérieur depuis les secondes ouvertures (12211) pour être expulsé depuis la sortie d'air (112).

4. Dispositif adaptateur d'aspiration sous vide (1) équipé d'un module de choc électrique (12) selon la revendication 3, dans lequel les premières ouvertures (12111) sont plus grandes que les secondes ouvertures (12211), l'objet électrochoqué (14) étant autorisé à passer à travers les premières ouvertures (12111) mais pas à travers les secondes ouvertures (12211).

5. Dispositif adaptateur d'aspiration sous vide (1) équipé d'un module de choc électrique (12, 22, 32, 42, 52, 62) selon la revendication 2, dans lequel la première électrode (121, 221, 321, 421, 521, 621) est une première pièce métallique (2211, 3211, 4211, 5211, 6211), et la seconde électrode (122, 222, 322, 422, 522, 622) est une seconde pièce métallique (2221, 3221, 4221, 5221, 6221), un espace de la zone de choc électrique (123, 223, 323, 423, 423', 523, 523', 623, 623') étant défini et entouré par la première pièce métallique (2211, 3211, 4211, 5211, 6211) et la seconde pièce métallique (2221, 3221, 4221, 5221, 6221), une entrée de zone de choc électrique (2231, 3231, 4231) étant formée conjointement par la première pièce métallique (2211, 3211, 4211, 5211, 6211) et la seconde pièce métallique (2221, 3221, 4221, 5221, 6221) du côté de la première pièce métallique (2211, 3211, 4211, 5211, 6211) et du côté de la seconde pièce métallique (2221, 3221, 4221, 5221, 6221) proche de l'entrée d'air (111), une sortie de zone de choc électrique (2232, 3232, 4232) étant formée conjointement par la première pièce métallique (2211, 3211, 4211, 5211, 6211) et la seconde pièce métallique (2221, 3221, 4221, 5221, 6221) du côté de la première pièce métallique (2211, 3211, 4211, 5211, 6211) et du côté de la seconde pièce métallique (2221, 3221, 4221, 5221, 6221) proche de la sortie d'air (112), l'objet électrochoqué (14) entrant dans l'entrée de zone de choc électrique (2231, 3231, 4231) pour pénétrer dans l'espace de la zone de choc électrique (123, 223, 323, 423, 423', 523, 523', 623, 623') et être électrochoqué plusieurs fois, et s'écoulant hors de la zone de choc électrique (123, 223, 323, 423, 423', 523, 523', 623, 623') par la sortie de zone de choc électrique (2232, 3232, 4232) pour être expulsé depuis la sortie d'air (112).

6. Dispositif adaptateur d'aspiration sous vide (1) équipé d'un module de choc électrique (12, 22, 32, 42, 52, 62) selon la revendication 5, comprenant en outre une tête d'aspiration (17) reliée en amont de l'entrée d'air (111), et une surface de section transversale de la tête d'aspiration (17) se rétrécissant progressivement depuis l'entrée d'air (111) vers une entrée d'aspiration extérieure de la tête d'aspiration (17).

7. Dispositif adaptateur d'aspiration sous vide (1) équipé d'un module de choc électrique (12, 22, 32, 42, 52, 62) selon la revendication 5, dans lequel l'entrée de zone de choc électrique (2231, 3231, 4231) est plus grande que la sortie de zone de choc électrique (2232, 3232, 4232).

8. Dispositif adaptateur d'aspiration sous vide (1) équipé d'un module de choc électrique (12, 22, 32, 42, 52, 62) selon la revendication 5, comprenant en outre une unité de commande de réglage de position d'électrodes (424, 524, 624) pour faire se déplacer la première électrode (121, 221, 321, 421, 521, 621) et la seconde électrode (122, 222, 322, 422, 522, 622) relativement l'une à l'autre afin de modifier une taille de la zone de choc électrique (123, 223, 323, 423, 423', 523, 523', 623, 623').

9. Dispositif adaptateur d'aspiration sous vide (1) équipé d'un module de choc électrique (52, 62) selon la revendication 8, dans lequel la première électrode est une pièce métallique flexible, la pièce métallique flexible étant pliée et déformée de manière flexible de sorte que la première électrode (521, 621) soit déplacée près de la seconde électrode (522, 622) sans être en contact avec la seconde électrode (522, 622).

10. Dispositif adaptateur d'aspiration sous vide (1) équipé d'un module de choc électrique (52, 62) selon la revendication 9, dans lequel une zone de gain de choc électrique (5231, 6231) est générée là où la pièce métallique flexible est pliée et déformée de manière flexible.

11. Dispositif adaptateur d'aspiration sous vide (1) équipé d'un module de choc électrique (12, 22, 32, 42, 52, 62) selon la revendication 1, comprenant en outre un interrupteur de commande (182), dans lequel l'interrupteur de commande (182) est relié électriquement au module d'élévation de tension électrique (181) pour commander l'alimentation électrique des modules de choc électrique (12, 22, 32, 42, 52, 62).

12. Dispositif adaptateur d'aspiration sous vide (1) équipé d'un module de choc électrique (12, 22, 32, 42, 52, 62) selon la revendication 11, comprenant en outre un module de batterie (183), dans lequel le module de batterie (183) est rapidement démontablement relié électriquement au module d'élévation de tension électrique (181) pour fournir de l'énergie au module d'élévation de tension électrique (181).

13. Dispositif adaptateur d'aspiration sous vide (1) équipé d'un module de choc électrique (12, 22, 32, 42, 52, 62) selon la revendication 1, comprenant en outre un module de batterie (183), dans lequel le module de batterie (183) est rapidement démontablement relié électriquement au module d'élévation de tension électrique (181) pour fournir de l'énergie au module d'élévation de tension électrique (181).
